# EUROPEAN PATENT SPECIFICATION

(11) **EP 2 554 467 B1**
(45) Date of publication and mention of the grant of the patent: **12.03.2014**
(21) Application number: 12176338.7
(22) Date of filing: 13.07.2012
(51) Int. Cl.: B62M 7/02, B62K 11/04

(54) **Motorcycle**
Motorrad
Motocyclette

(30) Priority: 02.08.2011 IT UD20110122
(43) Date of publication of application: 06.02.2013
(73) Proprietor: Bertoni, Loris, 33100 Udine (IT)
(72) Inventor: Bertoni, Loris, 33100 Udine (IT)
(74) Representative: Wagner, Kilian

(56) References cited:
- EP-A1- 0 423 813
- JP-A- 2 181 033
- JP-A- 2 211 321
- JP-A- 4 173 491
- JP-A- 4 224 489
- JP-A- 60 050 025
- JP-A- 2005 225 492

## Description

### FIELD OF APPLICATION

This invention relates to a motorcycle, advantageously but not exclusively of competition or supersport type.

In particular, the motorcycle according to this invention is provided by a wide V internal combustion engine, according to a particular and desired arrangement. Here and in the following description, as wide V engine is meant that cylinders axis lie on planes inclined to each other by an angle exceeding 90°avantageously but not exclusively exceeding 120°comprising between these also the case of boxer type engines, in which the cylinders lie on the same plane, or the V angle is 180 °.

### STATE of THE ART

Motorcycles comprise, in a known manner, a plurality of components which are associated with a frame according to a pre-determined order and according to a fixed arrangement with respect to the latter.

In particular, the elements which determine the substantial overall dimensions of the motorcycle and whose arrangement must be appropriately designed, to reduce the overall dimensions of the motorbike, in order to obtain an adequate maneuverability are: the motor, the air intake case, also known as "airbox", the intake groups, the cooling radiator, the fuel tank and eventually the exhaust tubes.

In fact, the relative arrangement of the components on the frame of the motorcycle, and the one of the driver, are determining the position of center of gravity of the motorcycle.

The position of the center of gravity affects the handling and the behavior during braking and acceleration of the motorcycle itself.

In order to optimize this behavior, it is known to design and arrange the components of the motorcycle in order to lower as much as possible its center of gravity in a manner to obtain a reduced tensor of inertia.

Are known competition motorcycles equipped with a motor with cylinders arranged according to a wide V layout, in which the respective upper cylinders, also called upper bank cylinders are lying with their axes, on a plane which is tilted forward the front side of vehicle of an angle of 30-40° respect to a vertical line.

The axes of said cylinders, in turn define, the planes of arrangement of the cylinders which are substantially parallel to the longitudinal plane of arrangement of the motorcycle itself, which in turn is parallel to the direction of travel.

With this particular motor layout are also known motorcycles which fuel tank is arranged under the motor, but this involves problems connected with the necessity of insulating the tank itself from heat produced from the engine above.

Moreover this last embodiment has the drawback that, during the use, due to consumption of fuel contained in the tank, there is a gradual raising of the center of gravity of the vehicle. This entails a reduction in the ease of handling of the motorcycle during its use.

It is also known, from document GB-A-1.348.989 a motorcycle equipped with an opposed cylinders motor, or boxer type, in which the, the cylinders have their axes substantially lying on an plane which is inclined of about 30-45° respect to an horizontal line, or the ground.

Furthermore the upper bank cylinders, the ones that, when mounted on the frame are arranged above, are directed towards the rear of the motorcycle. This particular architecture of the motorcycle, while allowing to lower the center of gravity, has, however, the drawback of requiring a great distance between the engine and the front wheel, so as to prevent the engine, due to lowering of the motorcycle, for example in case of braking, interfere with the front wheel.

This implies a high overall length of vehicle, which reduces handling and makes it inappropriate for a sport or racing use.

Moreover, given the particular arrangement of the motor, exhaust tubes are located in a very low position of motorcycle.

In order to avoid that the tubes should be in contact with the ground, is necessary to rise the components, and in particular the location of the engine block relative to the frame.

Also known are racing motorcycles, for example of the enduro type, equipped with boxer motor, whose cylinders are arranged substantially parallel to the ground in a transversal direction respect to the direction of travel, or transversal to longitudinal plane of motorcycle.

This particular architecture, once upon a time allowed to obtain a low center of gravity position thanks to horizontal cylinders.

Due to very high leaning angles allowed by today's tires, the crosswise boxer engine must be arranged very high in the frame, to avoid the contact of thermal groups with road surface when on the bends, so it loses any advantage of center of gravity position in comparison with traditional architectures.

Moreover, the boxer engines always risk to be damaged due to falls or shocks, since their profile protrudes from the shape of vehicle.

From JP 2181033 (A) a motorcycle is known, which has a motor with two crankshafts that are located one above the other, whereby the crankshafts have individual crank chambers. The aim is to reduce the lengthwise dimension of the engine. However having two crankshafts causes an increasing vertical size of the motor and an undesired rise of the gravity center of the vehicle due to the position of the upper crankshaft, having the lower crankshaft already located in a suitable position to avoid any contact between the lower motor head and the road surface.

The document JP 2005225492 (A) shows a motorcycle having an airbox located over the motor head and behind the steering wheel to find a place for rider's feet. It is not shown how the airbox is connected to the engine. The known motor bike is not of the racing type.

The document JP 4224489 (A) refers to a particular motorcycle frame with special supports in order to reduce absorption of vibrations.

The document JP 4173491 (A) refers to a particular layout of expansion type exhaust chambers in a multi cylinder two-stroke engine. The motor of the known motorcycle has a couple of expansion type exhaust chambers, in which the chamber of the upper cylinder starts from the front part of the cylinder and the chamber of the lower cylinders starts from the rear part of the cylinder. The location of the chambers is advantageous in order to be able to use the space under the motor and to avoid interferences with the swing arm.

The document EP 0 423 813 A1 refers to a particular design of intake ports and injection devices / throttle bodies in a two-stroke V-bank arrangement engine. This design allows restricting the encumbrance of intake groups inside a sector, whose radius is the distance between crankshaft and the top of the cylinder head. The shown design only makes sense in connection with small dimensions of carburetors / throttle bodies. The known design is not suitable for high performance, respectively competition motorcycles. The increasing dimensions of carburetors / throttle bodies will lead to an undesirable effect of increasing distance in this design between the crankshaft center and the front wheel center. It is not shown, how the airbox is connected to the engine.

The document JP 60050025 A describes a motorcycle, comprising the features of the preamble of claim 1.

A scope of present invention is the realization of a motorcycle which is efficient, which has low costs, and which is competitive in terms of sport- racing.
To overcome the drawbacks of the prior art, and to obtain further scopes and advantages, the applicant has studied experimented and realized the present invention.

### EXPOSURE OF THE INVENTION

The present invention is expressed and characterized in the independent claim. The dependent claims expose other characteristics of the present invention or variants of the main solution idea.

The motorcycle, which is realized by the invention is equipped with a motor, whose layout together with the layout of subsidiary bodies achieves a maximum length compaction of the motorcycle, a maximum concentration of masses around the center of gravity of the motorcycle due to the low position of the exhaust tubes of the upper bank and due to the low position of the fuel tank and maximum efficiency of the intake system due to the shortest possible path of the intake gases. In summary as a result of the invention, the center of gravity is shifted lower and more in forward direction compared with prior art motorcycles.

According to the above purposes, a motorcycle under the present invention, advantageously but not exclusively of competition type or supersport type, comprises a frame to which is associated a front fork which extends along a first longitudinal direction of development, and a rear swingarm.

Surprisingly, a two stroke boxer motor of the single crankshaft type which is installed in a motorcycle frame with its cylinders in an almost vertical plane can be located in a position which determines a substantial equity with the center of gravity of prior art motors thanks to the reduced height of two stroke thermal groups. However this layout achieves the following huge advantages:
1. lowering the center of gravity of the fuel
2. huge longitudinal compaction of the vehicle
3. shifting forward the center of gravity of the vehicle
4. lowering the global center of gravity of the vehicle
5. efficiency of the intake system.

On the front fork and on the swingarm are provided respectively a front wheel and a rear wheel which define a first lying plane of the motorbike.

The motorcycle moreover comprises an internal combustion motor of wide V type interposed between the front fork and the swingarm, having at least one pair of cylinders formed by at least one first cylinder and, at least a second cylinder having respectively a first and a second axis angularly offset to each other of a determined first angle and lying on respective planes which are parallels to said first lying plane of motorcycle.

According to an aspect of present invention, the bisector of the angle comprised between said first axis and the second axis of the first and second cylinder is located substantially orthogonal to the first development direction of front fork.

This particular arrangement of the motor with respect to the frame, allows to obtain a motorcycle with an architecture which makes it shorter and therefore more manageable.

In fact, with an arrangement of this type it is possible to obtain a mutual position of the components in order to lower the center of gravity of the same with the consequent reduction of the tensor of inertia of motorcycle.

Moreover, this motor arrangement allows a reduction of the wheelbase of motorcycle as well.

The motorcycle according to the invention also includes air feed devices having at least an intake case (airbox), and feeding devices having the purpose of fluidically connect the air intake device and the motor.

According to the invention the airbox is located at least partially, advantageously completely above the motor, in an advanced position with respect to the latter and preferably in front of the fuel tank, while the feeding groups are associated with the motor on the side facing the front wheel.

The particular arrangement of the airbox, as well as allowing its conformation substantially regular, such as to optimize the aerodynamic flow on the inside, allows air to flow through it without the drawback of being heated from the engine parts which radiate heat, which would reduce the global efficiency of the motor, being the radiating parts of engine apart from the airbox itself.

Another important feature according to the invention is that the feeding devices, which are located between the airbox and the engine, run at least partially through the cooling radiator. Therefore, according to the invention, the cooling radiator has a through opening, suitably shaped, so as to allow the positioning (at least partial) of feeding devices or part of it through this opening. This important feature allows to further approach the radiator to the motor emphasizing the benefits listed above. Most important is, that having a cooling radiator featuring a window through opening allows to reduce lengthwise encumbrance of the engine.

In summary the aim of the invention is achieved by the combination of the following features:
a) substantially orthogonally disposing the bisector of the first angle between the first axis and the second axis of first and the second cylinders to the first longitudinal direction of development of the front fork; (in other words, the cylinders are disposed in a way to have the bisector of the first angle between first an second cylinders orthogonal to the first longitudinal direction of development on the front fork)
b) disposing the intake airbox at least partly above the engine in a forward position with respect to the latter and associating the feed units with the engine of the side oriented towards the front wheel;
c) providing a through cavity in the radiator, that allows at least partial positioning of the feeding units through it. This allows both, maximum lengthwise compaction of the motorcycle and the shortest possible path for the intake gases, especially when the airbox is located behind the head pipe.

Preferably the throttle body is orientated vertically, which allows a maximum longitudinal compaction of the engine, while the window in the radiator (through hole) allows a further motorcycle length compaction.

In embodiments of the present invention, the front fork is inclined with respect to the horizontal of a second angle between 55 °and 75 °, preferably between 60 ° and 70 °, more preferably between 62 ° and 68 °.
In the case of boxer engine, it follows that the plane containing the cylinders has an inclination similar of that of the fork.

In embodiments of the present invention, the first angle between the cylinders has a value comprised between 150 °and 210 °, preferably between 160° and 200 °, more preferably between 170 and 190 °

It is advantageous to provide that, in other embodiments, the motor is of opposed cylinders type, so that the angle between the cylinders is 180 °.

In this specific case, the cylinders are arranged inclined to the horizontal by an angle equal to the angle of inclination of the fork, or substantially parallel to the first direction of development of the fork

Cylinders include exhaust ports oriented towards rear wheel, to these exhaust ports the exhaust devices are associated.
In this way exhaust devices don't interfere in any way with the front wheel of motorcycle, neither with radiator.

According to a further aspect, air feed devices include a first air intake manifold, which connects the said airbox with feeding devices:
The feeding devices comprise at least a butterfly body, which is connected to a first air intake manifold, and a second angle shaped manifold which connects the butterfly body and motor crank chamber. The first manifold and butterfly body are substantially arranged vertically and the second manifold has an intake end towards the motor which is substantially parallel to the above said bisector of the cylinders.

In the application text the terms "throttle body" and "butterfly body" are used synonymous and are preferred embodiments for feeding devices in case of injection type motors and indirect injection type motors. In case of indirect injection the throttle body (alternatively called butterfly body) only controls the airflow by means of its valve. Pulverization of the fuel and mixing with air is obtained by the injector which can have different localizations around the butterfly body, but in any case it is positioned outside the combustion chamber. In case of direct injection the throttle body (alternatively called butterfly body) only controls the air flow by means of its valve. Pulverization and mixing of the fuel with air is obtained by the injector which is located in the head of the motor and performs injection by pulverizing fuel directly inside the combustion chamber. The invention can also be realized with a carburetor type motor. The carburetor performs both pulverization of the fuel, mixing and airflow control inside its body (alternatively called butterfly body).

Preferably the one manifold, especially a second manifold, is angle shaped, more preferably with an angle between two pipe sections of the manifold in a range between 80 to 100 °, more preferably between 85 and 95 °, most preferably from about 90°.

With this particular arrangement, the air intake devices and feeding devices take a simple and regular conformation, such that to drive the intake air flow and the air-fuel mix trough a regular path which reduces the pressure drop and ensures the maximum feeding efficiency to the motor.

Having a vertical butterfly body, especially a carburetor-throttle body, connected with an angle manifold to the intake port results in a longitudinal compactness of the motor. The angle manifold for connecting the butterfly body with the intake of the motor allows having the shortest possible total duct length from intake port to airbox, when the airbox is located behind the head pipe.

With respect to prior art motorcycle layout, the motor mass (approx. 50 kg) is located more towards the front wheel, in order to reduce the tendency to wheeling during acceleration, and the fuel tank mass (approx. 25 kg) is located much lower in order to achieve a lowering of center of gravity of entire vehicle. This layout furthermore achieves an outstanding centralization of masses due to the proximity of the respective center of gravity of the above mentioned masses of motor and fuel tank. The proximity of these two masses, coupled with their extremely low position within the vehicle will result in both extremely reduced tensors of inertia and in an extremely low position of center of gravity of vehicle itself. In a nutshell, the motor layout and the intake system design allow a special length compactness and a low location of exhaust tubes and consequently a low position of the fuel tank.

According to another aspect, to the motor is associated a cooling radiator, shaped in order to have the concave side facing the front wheel, and a corresponding convex portion which is facing the motor. The opening (through cavity), which allows the throttle bodies to go through the radiator does not effect the cooling power of the radiator due to its small dimensions and due to its preferred location in the less ventilated area of the radiator behind the front wheel. Alternative designs to create the through opening are possible, e.g. splitting radiator into two radiators.

In this way it is possible to reduce the distance between the motor and front wheel, preventing the risk of interference between the cooling radiator and front wheel, also during the fork travel.

This solution allows both to reduce overall length of motorcycle, and eventually increasing the length of swingarm in order to reduce the travel angle of this last keeping the same vertical travel of rear wheel.

The motorcycle comprises, furthermore a fuel tank, substantially arranged above the motor and behind the airbox.

The shape and the arrangement of airbox and fuel tank give to the vehicle a better ergonomics, since the tank, although having an adequate capacity, develops itself only below of the horizontal line of the upper steering plate.

In other words, with present invention, thanks to reduced height of thermal groups of a two stroke motor of small unitary displacement, is possible an almost vertical arrangement of lower thermal groups preventing that its lower parts are as close to the ground in a detrimental way for the safety of the vehicle while driving

Since the lower cylinder bank, similarly to the above, has a limited encumbrance in the crosswise plane as well, the architecture of present invention allows to reach very high leaning angles (55°) without the occurrence of contacts between the road surface and some elements of the motor itself.

In brief, this architecture allows to achieve a low center of gravity position and a reduced wheelbase of vehicle, and consequently excellent handling characteristics avoiding that any part of the motor protrudes from the shape of the vehicle itself.

According to a preferred embodiment of the invention, the motor of the motorcycle only has one (a single) crankshaft in order to reduce the lengthwise size and height of the motor itself compared to a motor design with two crank shafts one above the other. The motor design with only one single crankshaft allows to have the motor center of gravity in a lower position. Moreover it allows to have a smaller gyroscopic effect of the crankshaft and smaller tensors of inertia in the three motor planes. A motor with a design described above needs to be installed with the crank shaft center higher, preferably about 2 cm higher, than a V110° motor within a motor cycle. But the lower bank of cylinders is lower, preferably about 5 cm lower, than in a known V110° layout. This restores equality in position of the center of gravity of the two engines and shows that in a V110° layout the lower bank of cylinders has not been in the lowest possible position. But compared with a V110° layout the described preferred architecture allows much more lengthwise compactness.

### ILLUSTRATION OF THE DRAWINGS

These and other characteristics of present invention will clearly appear from a preferential form of embodiment, provided as an example, not limitative, with reference to the accompanying drawings in which:
Figure 1 is a side view of a motorcycle according to the present invention;
Figure 2 is a view of a detail of figure 1;
Figure 3 is a view from the top of figure 2;
Figure 4 is a view from the front of figure 2;
Figure 5 is a view of a variant of figure 2;

To facilitate the understanding, identical reference numbers have been used where possible, to identify common elements identical in figures.

Should be understood that elements and characteristics of an embodiment can be conveniently incorporated into other embodiments without further explanation.

### Description of a preferential form of embodiment

With reference to attached figures, a motorcycle according to the present invention is indicated as a whole with reference number 10 and comprises in its essential components a frame 11 on which is mounted an internal combustion motor, in this case an opposed cylinders motor or boxer motor 12, 112 which is associated to air intake devices 13, feeding groups 44 and exhaust devices 15 of combustion gases.

The motor has only one single crankshaft.

The air intake devices 13 comprise conveyors 40, an air intake case, also known as "airbox" 25 and first manifolds 41 which bring the air from the airbox to feeding groups 44.

To the upper part of frame 11, a fuel tank 23 is associated.
The over mentioned air intake case 25 results to be placed in front of the tank, with respect of the direction of travel of the motorcycle 10.

The frame 11 is associated in its front part with a steering head 16 which allows the rotation of the front fork 17 around a steering axis Z.

To the front fork is associated, in a known manner, a front wheel 18.

To the rear part of frame 11 is associated a swingarm 21 to which is associated a rear wheel 22.

The front fork 17 extends itself along a first direction of longitudinal development which is parallel to axis Z, and it is provided in known manner of shock absorbers which control and limitate the wheel 18 travel along a direction parallel to rotation axis Z, approaching or moving away the wheel from frame 11 for example in acceleration/braking phase.

Front fork 17 is inclined respect the horizontal of an angle beta comprised between 55° and 75 °,preferably between 60 °and 70°,more preferably between 62 °and 68 °.

The swingarm 21 is pivoting on the frame 11 and it is as well provided in a known manner of a shock absorber which controls and limitates the rear wheel 22 travel respect to frame 11.

The front wheel 18 and rear wheel 22 define a common lying plane which corresponds to longitudinal lying plane of motorcycle.

In the normal use of motorcycle, in the absence of leaning, or when the front wheel doesn't steers the above mentioned lying plane is normally vertical.

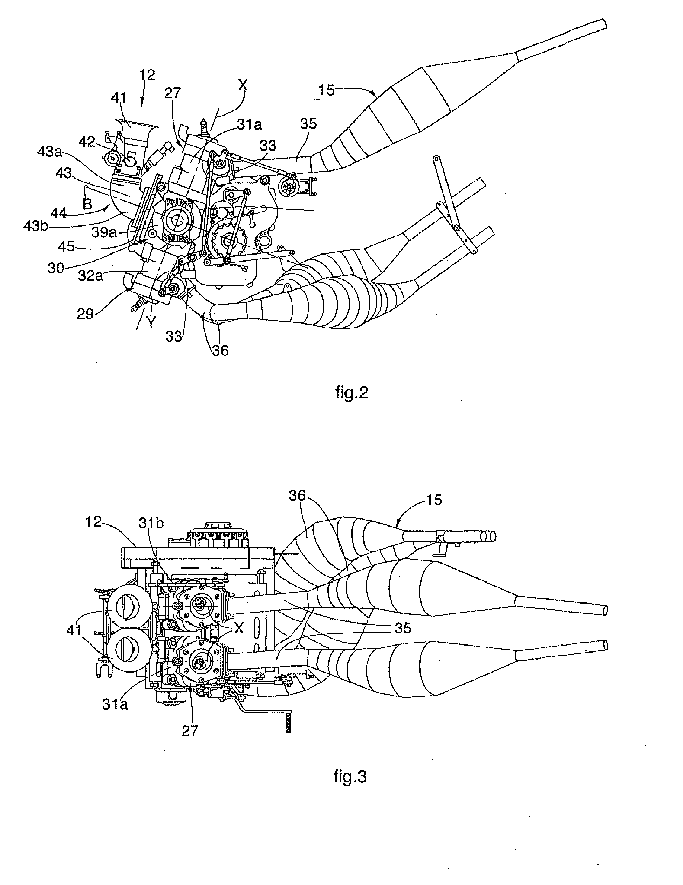

In some embodiments the boxer engine, shown in the fig. 2-4 is, in this case a four cylinders two strokes, rotary valve intake and indirect injection, and comprises a motor block 30 having a first upper bank 27 of two first cylinders 31 a, 31 b and a second lower bank 29 of two seconds cylinders 32a ,32 b.

The first two cylinders 31a, 31b and second cylinders 32a, 32b each have respectively first axis X and second axis Y, along which, during operation, are moving the relative pistons, not represented in drawings.

First axis X and second axis Y substantially lie on planes which are parallels to the above mentioned longitudinal lying plane of motorcycle.

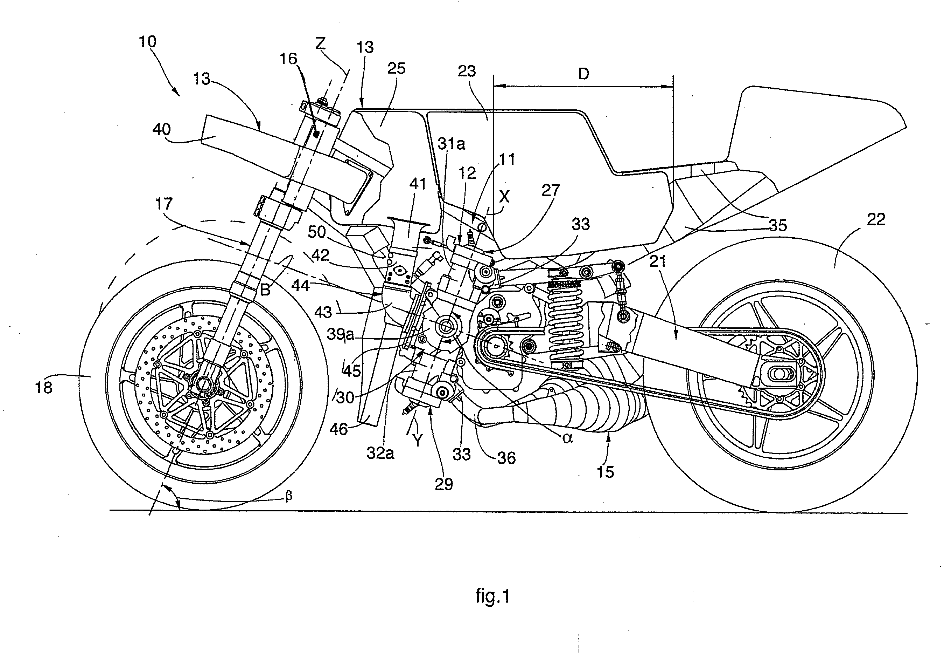

In the case illustrated by figure 1, first axis X and second axis Y are angularly offset of an angle alfa of 180°, to define this way the classical boxer motor layout 12.

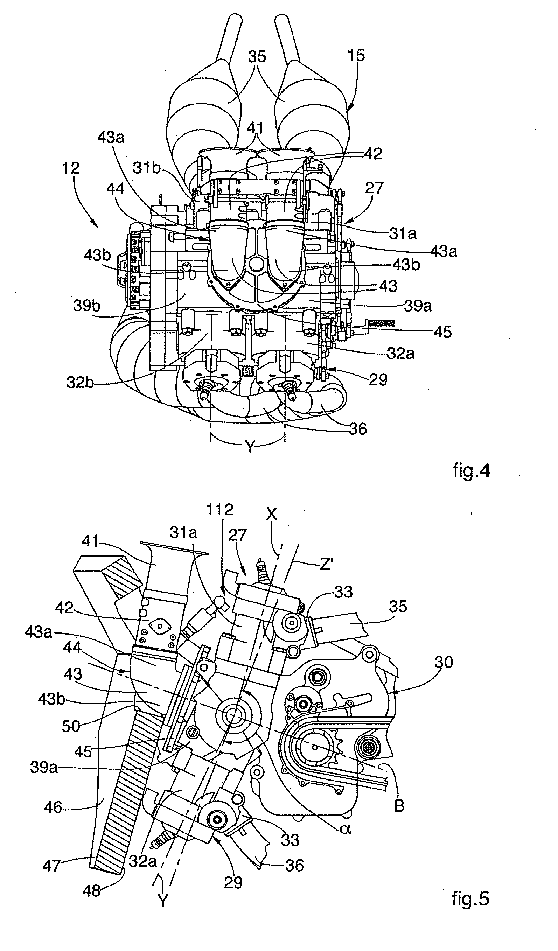

In other embodiments (fig 5) the motorcycle is provided by a wide V motor, indicated for convenience of description with reference 112, which unlike what previously described for motor 12, shows the first axis X and the second axis Y having a between angle alfa of a value comprised within 150°and 210° preferably within 170°and 190°, in this case 190°.

For clarity, in the fig. 5 is shown an axis Z1, which is substantially parallel to steering axis Z of head pipe 16.

In both cases, the arrangement angle alfa of cylinders 31 a, 31 b, 32a, and 32b has a bisector B whose elongation towards the front part of motorcycle 10 is substantially perpendicular to rotation axis Z of head pipe 16,or to axis of front fork 17.

In the specific case of boxer motor 12 the first axis X and the second axis Y are substantially parallel to rotation axis Z of the front fork 17, so they are angularly offset with respect of the ground of the same angle beta.

Both in the case of boxer motor 12 and in the case of wide V motor 112, the first cylinders 31 a, 31 b and second cylinders 32a, 32b, have their exhaust ports 33 oriented towards the rear side of motorcycle 10 and to these ports the exhaust devices 15 are connected.

The exhaust devices comprise the first exhaust tubes 35 and the second exhaust tubes 36 associated respectively to first cylinders 31 a, 31 b and to second cylinders 32a, 32b.

First exhaust tubes 35 and second exhaust tubes 36 are shaped as follows: first cylindrical part, diverging cone, second cylindrical part, converging cone, final small tube.

Considering the particular layout of the motor 12 with respect to frame 11, the exhaust ports 33 of first cylinders 31, 31 b are downwards oriented and allow to locate the starting point of first exhaust tubes 35 lower than in prior art motorcycles and to locate the same point more towards the rear part of motorcycle.

In particular ,but not limited, the initial part of an exhaust tube for a motor of an unitary displacement of 125ccm of high performances, has a diameter of 35-40 mm, and the central part has a diameter of 120-130 mm.

The applicant has evaluated that with respect with known embodiments like the motorcycle Honda NSR, the starting point of the exhaust pipes il located 7 cm lower and the diverging part of first exhaust tubes 35 starts 17cm more towards the rear part of motorcycle.
This because the first cylinders 31a, 31b are tilted backwards and not frontwards.

This way it has been possible to define a larger free room for the positioning and development of the fuel tank 23 above the motor 12, 112.

In fact, between a motor with the upper bank tilted forwards, and the motorcycle 10 according to present invention, the particular lay out of exhaust tubes 15, allows a different conformation of fuel tank 23, that in the case illustrated in the figures, in an illustrative and not limitative case of the present invention, is made as follows.

The fuel tank 23 has a central part developed towards the motor 12, its central part has a length D of 35 cm and a width, crosswise to the travel direction, of 24 cm.

Since with the present invention is possible to locate the fuel tank 23 about 12 cm lower than in an arrangement, that is allowed by motors of the type "wide V with upper bank titled frontwards", one will have a volume of about 9.5 liters of fuel, corresponding to about 7 kg which are placed 12 cm more below.

To this follows, therefore a lowering of position of center of gravity and a decrease in the tensor of inertia (*in the cross-vertical plane).

Second exhaust tubes 36 are located, in a known way, within the lower thermal groups shape, or they have the same distance from road surface than the heads of second cylinders 32a, 32b.

First cylinder 31a and second cylinder 32a are connected to a first common crank chamber 39a, while the first 31 b and the second 32b are connected to a second common crank chamber 39b.

Two crank chambers 39a and 39b are associated feeding groups 44 which receive from first manifolds 41 the air coming from the airbox 25.

In particular, the conveyors 40 take air from the front/upper part of motorcycle 10 and take it to the airbox.

The airbox 25 takes air from conveyors 40 and it may be provided in its inner part of air filters.

The feeding groups 44 include butterfly bodies 42and second angle shaped manifolds 43, which are connected to the external flange of a rotary disc valve which is associated with crank chambers 39a, 39b. There is only one (single) angle-manifold 43 between the butterfly body 42 and the engine, instead of two horizontal manifolds like in other known V-motors in order to reduce the permissible distance between motor and front wheel.

In the case of indirect injection, the butterfly bodies are provided of a butterfly valve for air flow control and of a fuel injector.

In the case of direct injection the butterfly bodies include only the butterfly valve for air flow control.

Traditional carburetor could take the place of a butterfly body as well.

The rotary valve 45 controls the intake gases flow in crank chambers 39a, 39b, according to pistons position.

In other embodiments, rotary valve 45 may be replaced by reed valves which control the intake of feeding gases in to crank chambers 39a,39b, according to their inner pressure.

In the case of indirect injection, in the butterfly body 42 or upstream of it, i. e. over the first manifold 41, is created the mix air-fuel which enters the engine 12,112 through the second manifolds 43.

The embodiment shown in the figures is of the indirect injection type, but it could be of the direct injection type or the carburetor type alternatively, whereby all alternatives preferably have one angle manifold.

Given the proximity between the airbox 25 and butterfly bodies 42, first manifold 41 has a straight and short path, thus contributing to reduce the length of path of the air in which this flows in a turbulent way(upstream the butterfly bodies).

Second manifold 43 comprises a first end 43a which is connected to butterfly bodies 42 and a second end 43b which is connected to the rotary valve 45 (flange) with an angle part which is substantially parallel to the bisector B of cylinders (angle).

Gas flow through the second manifold is not affected by relevant dynamic losses.

With the present invention, therefore a more efficiency conveying of feeding fluids is achieved from the point of view of fluid dynamics compared to known embodiments, achieving moreover a further lengthwise compaction of vehicle.

All this thanks to particular arrangement of butterfly bodies42 respect to second manifolds 43.

The airbox is located in the proximity of head pipe 16 and in an advanced position respect to motor 12,112,so the air which flows through it is not heated by the presence of motor 12,112 ,being the radiant parts of this last spaced from the same airbox 25.

This particular location of the airbox 25 allows to shape this last in a very regular conformation, with a large volume respect known embodiments, as well as locating the fuel tank 23 close to the airbox 25 avoiding a development of the fuel tank 23 in vertical sense which would rise the center of gravity and tensors of inertia of motorcycle 10.

This is also allowed from the particular conformation of the airbox 25.

Only by example the airbox have an inner volume of 18 liters.

Furthermore, from airbox 25, air flows through first manifolds 41 towards motor 12,112 following a straight and regular path as to avoid dynamic losses and to ensure the maximum intake efficiency of the motor 12,112.

The fuel tank 23 as well has a very regular conformation, since it can develop towards the lower part of motorcycle 10 or in the proximity of first cylinder bank 27, and under the rider's saddle.

In particular, the fuel tank 23 has a capacity within 28 and 32 liters, even if,for a street legal supersport motorcycle it can have a capacity of 18 liters.

Conformation and location of both fuel tank 23 and airbox 25 give better ergonomics to vehicle.

To the motor 12.112 is furthermore associated a cooling radiator 46 arc-shaped in order to have the concave side 47 facing the front wheel 18, and a corresponding convex portion which is facing the crank chambers 39a,39b of the motor 12, 112.

In the specific case, the radiator 46 is provided by a trough opening, suitably shaped, so as to allow the positioning, at least partial, through it, of feeding devices 44, or of part of it, and particularly of the second manifolds 43.

This constructive solution is advantageous because it allows to locate the radiator 46 in the proximity, if not extremely close to motor block 30 so as it doesn't in any case interfere with the front wheel 18, even in the case of lowering of the front fork17, for example in case of braking.

In this case, in fact, the closest part to the front wheel 18 is the manifold 43 (not the manifold 41) and not the radiator 46.

The particular conformation of radiator 46 allows a location of the motor 12,112 more close to the front wheel 18, making this way possible an elongation of swingarm 21 at equal wheelbase, with the benefit of a decreasing of travel angle of the swingarm 21 at equal vertical travel of the rear wheel 22.

It is clear that to the motorcycle until here described, modifications or additions of parts can be made without departing from the scope of the present invention. For example, it is possible to foresee that the motor 12,112 instead of being of two stroke type, is of four stroke type, as well as is possible to foresee that it is provided of two or six cylinders, and anyway a different number of cylinders different from four as described.

In other embodiments is possible to foresee that the motor 12,112, instead of being of indirect injection type, is of direct injection type, or carburetor type.

It is also clear, even if the present invention has been described with reference to some specific examples, a skilled-in-the-field person shall certainly be able to realize many other equivalent forms of a motorcycle having the same characteristics as set forth in the claims, and hence all coming within the scope of protection defined thereby.

## Claims

1. Motorcycle comprising a frame (11) to which a front fork (17) is associated which extends in a first longitudinal direction of development (Z) and on which a front wheel is mounted (18), an swing arm (21) on which a back wheel (22) is mounted, defining with said front wheel (18) a common first lying plane, normally vertical during use, of the motorcycle, and an internal combustion engine (12, 112), of the wide V type, interposed between said front fork (17) and said swing arm (21) and having at least a pair of cylinders (31a, 31b, 32a, 32b) formed by at least a first cylinder (31a, 31b) and by at least a second cylinder (32a, 32b) having respectively a first axis (X) and a second axis (Y) angularly offset with respect to each other by a determinate first angle (a) and lying on planes parallel to said first lying plane, the motorcycle further comprising air adduction devices (13) having at least an intake airbox (25) and feed units (44) suitable to fluidically connect said air adduction devices (13) and said engine (12, 112), the motorcycle further comprising a radiator (46), wherein the bisector (B) of said first angle (a) between the first axis (X) and the second axis (Y) of said first (31 a, 31 b) and second (32a, 32b) cylinders is disposed substantially orthogonal to the first longitudinal direction of development (Z) of said front fork (17), and whereby the intake airbox (25) is disposed at least partly above said engine (12, 112) in a forward position with respect to the latter, and whereby said feed units (44) are associated with said engine (12, 112) on the side oriented toward the front wheel (18),
**characterized in that**
said radiator (46) is provided with a through cavity (50) suitably shaped so as to allow the at least partial positioning through it of said feed units (44).

2. Motorcycle as in claim 1, **characterized in that** said front fork (17) is inclined with respect to the horizontal of a second angle (β) comprised between 55° and 75°, preferably between 60° and 70°, more preferably between 62° and 68°.

3. Motorcycle as in any claim hereinbefore, **characterized in that** said first angle (a) between the cylinders has an amplitude comprised between 150° and 210 °, advantageously between 160° and 200°, preferably between 170° and 190°.

4. Motorcycle as in claim 3, **characterized in that** said internal combustion engine (12) is of the type with opposite cylinders so that said first angle (a) is substantially 180° **and in that** said cylinders (31a, 31b, 32a, 32b) have their axes (X, Y) substantially parallel to the first longitudinal direction (Z) of said front fork (17).

5. Motorcycle as in any claim hereinbefore, **characterized in that** said cylinders (31a, 31b, 32a, 32b) comprise exhaust ports (33) oriented toward said back wheel (22) to which exhaust members (15) are associated.

6. Motorcycle as in any claim hereinbefore, **characterized in that** the air adduction devices (13) comprise at least a first collector (41) for the introduction of air which connects said intake airbox (25) with said feed units (44), **in that** the feed units (44) comprise at least a butterfly body (42), connected to said first collector (41), and at least an angle shaped second collector (43) which connects said butterfly body (42) and said engine (12, 112), **and in that** said first collector (41) and said butterfly body (42) are disposed substantially vertical and said second collector (43) has an intake side (43b) toward the engine (12, 112) substantially parallel to said bisector (B).

7. Motorcycle according to claim 6, **characterized in that**, that there is one manifold (second collector 43), located between the butterfly body (42) and the engine (12, 112), preferably having an angle between two pipe sections in a range between 85 ° and 95 °, most preferably 90 °.

8. Motorcycle as in any claim hereinbefore, **characterized in that** the radiator (46), shaped as an arc so as to have a concave portion (47) facing the front wheel (18), is associated with said engine (12, 112), and a corresponding convex portion (48) which faces and is possibly associated with said engine (12. 112).

9. Motorcycle as in any claim hereinbefore, **characterized in that** it comprises a tank (23) for containing fuel, disposed substantially above said engine (12, 112) and to the rear with respect to said intake airbox (25).

10. Motorcycle as in any claim hereinbefore, **characterized in that** the motor has only one crankshaft.

## Patentansprüche

1. Motorrad umfassend einen Rahmen (11), welchem eine Vordergabel (17) zugeordnet ist, welche sich in eine erste Längserstreckungsrichtung (Z) erstreckt und an welcher ein Vorderrad angebracht ist (18), einen Schwenkarm (21), an welchem ein Hinterrad (22) angebracht ist, definierend mit dem Vorderrad (18) eine gemeinsame erste liegende Ebene, im Regelfall vertikal während des Gebrauchs des Motorrads, und ein Verbrennungsmotor (12, 112) des weiten V-Typs, angeordnet zwischen der Vordergabel (17) und besagtem Schwenkarm (21) und aufweisend zumindest ein Zylinderpaar (31a, 31b, 32a, 32b) ausgebildet durch mindestens einen ersten Zylinder (31 a, 31b) und durch mindestens einen zweiten Zylinder (32a, 32b) aufweisend jeweils eine erste Achse (X) und eine zweite Achse (Y) winklig versetzt zueinander durch einen definierten ersten Winkel (a) und liegend in Ebenen, die parallel zu der ersten liegenden Ebene sind, das Motorrad weiter umfassend Luftansaugeinrichtungen (13) aufweisend zumindest eine Luftbox (Airbox) zum Ansaugen (25) und Zuführeinheiten (44), geeignet fluidtechnisch die Luftansaugeinrichtungen (13) und den Motor (12, 112) zu verbinden, das Motorrad weiter umfassend einen Kühler (46), wobei die Winkelhalbierende (B) des ersten Winkels (a) zwischen der ersten Achse (X) und der zweiten Achse (Y) des ersten (31 a, 31b) und zweiten (32a, 32b) Zylinders im Wesentlichen rechtwinklig zu der ersten Längserstreckungsrichtung (Z) der Vordergabel (17) angeordnet ist, und wobei die Ansaug-Luftbox (25) angeordnet ist zumindest teilweise über den Motor (12, 112) in einer Vorwärtsposition hinsichtlich der Letzteren, und wobei die Zuführeinheiten (44) verbunden sind mit dem Motor (12, 112) auf der zum Vorderrad (18) orientierten Seite,
**dadurch gekennzeichnet,**
**dass** der Kühler (46) versehen ist mit einer Durchgangsöffnung (50) geeignet geformt, um das zumindest teilweise Positionieren der Zuführeinheiten (44) durch diese hindurch zu erlauben.

2. Motorrad nach Anspruch 1,
**dadurch gekennzeichnet,**
**dass** die Vordergabel (17) geneigt ist hinsichtlich der Horizontale um einen zweiten Winkel (β) zwischen 55° und 75°, bevorzugt zwischen 60° und 70°, noch bevorzugter zwischen 62° und 68°.

3. Motorrad nach einem der vorherigen Ansprüche,
**dadurch gekennzeichnet,**
**dass** der erste Winkel (a) zwischen den Zylindern zwischen 150° und 210°, vorteilhaft zwischen 160° und 200°, bevorzugt zwischen 170° und 190° beträgt.

4. Motorrad nach Anspruch 3,
**dadurch gekennzeichnet,**
**dass** der Verbrennungsmotor (12) vom Typ mit gegenüberliegenden Zylindern ist, so dass der erste Winkel (a) im Wesentlichen 180° ist und dass die Zylinder (31 a, 31 b, 32a, 32b) ihre Achsen (X,Y) im Wesentlichen parallel zu der ersten Längsrichtung (Z) der ersten Vordergabel (17) haben.

5. Motorrad nach einem der vorherigen Ansprüche,
**dadurch gekennzeichnet,**
**dass** der Zylinder (31 a, 31 b, 32a, 32b) Auslasskanäle (33) umfasst die zu dem Hinterrad (22) orientiert sind, mit welchen Auslassbauteile (15) verbunden sind.

6. Motorrad nach einem der vorherigen Ansprüche,
**dadurch gekennzeichnet,**
**dass** die Luftansaugeinrichtungen (13) zumindest einen ersten Kollektor (41) für das Einleiten von Luft umfasst, welcher die Luftbox zum Ansaugen (25) mit den Zuführeinheiten (44) verbindet, und dass die Zuführeinheiten (44) zumindest einen Klappenkörper (42) umfassen, der mit dem ersten Kollektor (41) verbunden ist, und zumindest einen winkelförmig ausgebildeten zweiten Kollektor (43), welcher den Klappenkörper (42) und den Motor (12, 112) verbindet und dass der erste Kollektor (41) und der Klappenkörper (42) im Wesentlichen vertikal angeordnet sind und dass der zweite Kollektor (43) eine Saugseite (43b) zum Motor (12, 112) im Wesentlichen parallel zu der Winkelhalbierenden (B) hat.

7. Motorrad nach Anspruch 6,
**dadurch gekennzeichnet,**
**dass** ein Ansaugstutzen (zweiter Kollektor 43) vorgesehen ist, der zwischen dem Klappenkörper (42) und dem Motor (12, 112) angeordnet ist, bevorzugt mit einem Winkel zwischen zwei Rohrabschnitten in einem Bereich zwischen 85° und 95°, am meisten bevorzugt 90°.

8. Motorrad nach einem der vorherigen Ansprüche,
**dadurch gekennzeichnet,**
**dass** der Kühler (46), der als ein Bogen geformt ist, um dem Vorderrad (18) zugewandt einen konkaven Abschnitt (47) zu haben, mit dem Motor (12, 112) verbunden ist, und ein korrespondierender konvexer Abschnitt (48), welcher gegenüberliegt und möglicherweise mit dem Motor (12, 112) verbunden ist.

9. Motorrad nach einem der vorherigen Ansprüche,
**dadurch gekennzeichnet,**
**dass** es einen Tank (23) zum Fassen von Treibstoff umfasst, angeordnet im Wesentlichen über dem Motor (12, 112) und rückseitig relativ zur Ansaug-Luftbox (25).

10. Motorrad nach einem der vorherigen Ansprüche,
**dadurch gekennzeichnet,**
**dass** der Motor nur eine Kurbelwelle hat.

## Revendications

1. Motocyclette comprenant un cadre (11) auquel est associée une fourche avant (17) qui s'étend dans une première direction longitudinale de développement (Z) et sur laquelle est montée une roue avant (18), un bras oscillant (21) sur lequel est montée une roue arrière (22), définissant avec ladite roue avant (18) un premier plan de disposition commun, normalement vertical pendant l'utilisation, de la motocyclette, et un moteur à combustion interne (12, 112) du type en V large, interposé entre ladite fourche avant (17) et ledit bras oscillant (21) et ayant au moins une paire de cylindres (31a, 31b, 32a, 32b) formée par au moins un premier cylindre (31a, 31b) et par au moins un deuxième cylindre (32a, 32b) ayant respectivement un premier axe (X) et un deuxième axe (Y) décalés angulairement l'un par rapport à l'autre d'un premier angle déterminé (a) et se situant sur des plans parallèles audit premier plan de disposition, la motocyclette comprenant en outre des dispositifs d'adduction d'air (13) ayant au moins une boîte à vent d'admission (25) et des unités d'alimentation (44) appropriées pour assurer la communication fluidique desdits dispositifs d'adduction d'air (13) et dudit moteur (12, 112), la motocyclette comprenant en outre un radiateur (46), la bissectrice (B) dudit premier angle (a) entre le premier axe (X) et le deuxième axe (Y) desdits premiers (31a, 31b) et deuxièmes (32a, 32b) cylindres étant disposée de manière sensiblement orthogonale à la première direction longitudinale de développement (Z) de ladite fourche avant (17), et la boîte à vent d'admission (25) étant ainsi disposée au moins partiellement au-dessus dudit moteur (12, 112) dans une position avant par rapport à ce dernier, et lesdites unités d'alimentation (44) étant ainsi associées audit moteur (12,112) du côté orienté vers la roue avant (18),
**caractérisée en ce que**
ledit radiateur (46) est pourvu d'une cavité traversante (50) formée de manière appropriée pour permettre le positionnement au moins partiel desdites unités d'alimentation (44) à travers celle-ci.

2. Motocyclette selon la revendication 1, **caractérisée en ce que** ladite fourche avant (17) est inclinée par rapport à l'horizontale suivant un deuxième angle (β) compris entre 55° et 75°, de préférence entre 60° et 70°, plus préférablement entre 62° et 68°.

3. Motocyclette selon l'une quelconque des revendications précédentes, **caractérisée en ce que** ledit premier angle (a) entre les cylindres a une amplitude comprise entre 150° et 210°, de manière avantageuse entre 160° et 200°, de préférence entre 170° et 190°.

4. Motocyclette selon la revendication 3, **caractérisée en ce que** ledit moteur à combustion interne (12) est du type à cylindres opposés, de telle sorte que ledit premier angle (a) est sensiblement égal à 180°, et **en ce que** les axes (X, Y) desdits cylindres (31a, 31b, 32a, 32b) sont sensiblement parallèles à la première direction longitudinale (Z) de ladite fourche avant (17).

5. Motocyclette selon l'une quelconque des revendications précédentes, **caractérisée en ce que** lesdits cylindres (31a, 31b, 32a, 32b) comprennent des orifices d'échappement (33), orientés vers ladite roue arrière (22), auxquels sont associés des organes d'échappement (15).

6. Motocyclette selon l'une quelconque des revendications précédentes, **caractérisée en ce que** les dispositifs d'adduction d'air (13) comprennent au moins un premier collecteur (41) pour l'introduction d'air, lequel collecteur relie ladite boîte à vent d'admission (25) auxdites unités d'alimentation (44), **en ce que** les unités d'alimentation (44) comprennent au moins un corps de papillon (42), relié audit premier collecteur (41), et au moins un deuxième collecteur (43) en forme de coude qui relie ledit corps de papillon (42) et ledit moteur (12, 112), et **en ce que** ledit premier collecteur (41) et ledit corps de papillon (42) sont disposés sensiblement verticalement et ledit deuxième collecteur (43) a un côté admission (43b) vers le moteur (12, 112), lequel côté admission est sensiblement parallèle à ladite bissectrice (B).

7. Motocyclette selon la revendication 6, **caractérisée en ce qu'**il y a un collecteur (deuxième collecteur 43), situé entre le corps de papillon (42) et le moteur (12, 112), ayant de préférence un angle entre deux sections de tuyau dans une plage entre 85° et 95°, de manière tout particulièrement préférée de 90°.

8. Motocyclette selon l'une quelconque des revendications précédentes, **caractérisée en ce que** le radiateur (46), en forme d'arc de manière à avoir une portion concave (47) en regard de la roue avant (18), est associé audit moteur (12, 112), et a une portion convexe (48) correspondante qui est en regard dudit moteur (12, 112) et éventuellement associée à celui-ci.

9. Motocyclette selon l'une quelconque des revendications précédentes, **caractérisée en ce qu'**elle comprend un réservoir (23) destiné à contenir du carburant, disposé sensiblement au-dessus dudit moteur (12, 112) et à l'arrière par rapport à ladite boîte à vent d'admission (25).

10. Motocyclette selon l'une quelconque des revendications précédentes, **caractérisée en ce que** le moteur a seulement un vilebrequin.
